(19) Europäisches Patentamt
European Patent Office
Office européen des brevets

(11) **EP 3 450 477 B1**

(12) **EUROPÄISCHE PATENTSCHRIFT**

(45) Veröffentlichungstag und Bekanntmachung des Hinweises auf die Patenterteilung:
**04.11.2020   Patentblatt 2020/45**

(51) Int Cl.:
*C08G 18/76* *(2006.01)*     *C08G 18/08* *(2006.01)*
*C08G 18/20* *(2006.01)*     *C08G 18/24* *(2006.01)*

(21) Anmeldenummer: **18187414.0**

(22) Anmeldetag: **06.08.2018**

(54) **MEHRKOMPONENTIGE KLEBSTOFFSYSTEME UND DEREN VERWENDUNG**

MULTI-COMPONENT ADHESIVE SYSTEMS AND THEIR USE

SYSTÈMES D'ADHÉSIF À COMPOSANTS MULTIPLES ET LEUR UTILISATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.08.2017   DE 102017119910**
**07.06.2018   DE 102018113577**

(43) Veröffentlichungstag der Anmeldung:
**06.03.2019   Patentblatt 2019/10**

(73) Patentinhaber: **fischerwerke GmbH & Co. KG**
**72178 Waldachtal (DE)**

(72) Erfinder:
• **Schlenk, Christian**
  **79211 Denzlingen (DE)**

• **Ankermann, Carmen**
  **79346 Endingen a.K. (DE)**
• **Jakob, Rainer**
  **79111 Freiburg (DE)**
• **Vogel, Martin**
  **79286 Glottertal (DE)**
• **Pickelmann, Julia**
  **79104 Freiburg (DE)**

(74) Vertreter: **Suchy, Ulrich Johannes**
**fischerwerke GmbH & Co. KG**
**Gewerbliche Schutzrechte**
**Klaus-Fischer-Strasse 1**
**72178 Waldachtal (DE)**

(56) Entgegenhaltungen:
**EP-A1- 2 062 926        EP-A2- 1 439 155**
**DE-A1-102007 052 207    DE-A1-102009 046 050**

EP 3 450 477 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein mehr-, insbesondere zweikomponentiges, Klebstoffsystem für Befestigungszwecke im Baubereich und vor allem als Klebstoff im Heimwerkerbereich, insbesondere zum Befestigen von Verankerungselementen oder vorzugsweise zum Festkleben von Gegenständen, wie Schwimmbad-, Zimmer-, Badezimmer- und/oder Küchenaccessoires oder Adapterelementen zur Aufnahme dieser Accessoires, an (saugfähige und nichtsaugfähige) Substrate, insbesondere unter Verkleben von zwei nichtsaugenden Materialien, sowie dessen Verwendung und Verfahren unter dessen Verwendung zu den genannten Zwecken, wie in den unabhängigen und speziell abhängigen Ansprüchen dargelegt, und weitere unten dargelegte Erfindungsverkörperungen.

Es gab in der Vergangenheit verschiedene Anstrengungen, zwei (insbesondere nichtsaugfähige) Substrate in akzeptabler Zeit miteinander zu verkleben, mit der zusätzlichen Aufgabenstellung, dass die Verklebung unter geeigneten Bedingungen wieder lösbar und rückstandsfrei wieder entfernbar sein sollte. 2-Komponentenkleber sind für gewöhnlich zu hart, zu hochmodulig und nicht ohne Beschädigung der Substrate (und/oder befestigter Gegenstände) lösbar. Was 1-Komponentenkleber angeht (die regelmäßig durch Luftfeuchtigkeit härten), wurde versucht, 1K-Klebstoffe der genannten Nutzung zuzuführen, indem man z.b. befeuchtete Baumwollfasern einrührte oder eine zu befestigende Adapterplatte gesintert ausführte, um sie für Luftfeuchtigkeit durchlässig zu machen (Fa. nie wieder Bohren, siehe https://www.niewiederbohren.com/). Diese Varianten sind aufwändig und teuer und erfordern spezielles Zubehör.

Unter dem Namen "Double Bubble"® vertreibt LOCTITE ein ZweiKomponenten-Epoxidharz-Klebesystem, bei dem die Komponenten (Epoxidharz bzw. Härter) auf zwei Kammern eines Folienbeutels verteilt sind, die parallel angeordnet sind, und deren Inhalt durch gleichzeitiges Aufschneiden von außen mittels einer Schere zugänglich wird, wobei die Komponenten anschließend (z.B. in einem Gefäß) mittels eines Rührspatels gemischt und dann das resultierende rasch aushärtende Gemisch zum Kleben verwendet werden kann (siehe z.B. https://www.youtube.com/watch?v=xWxChOAD1Fo).

Alternativ wäre denkbar, geeignete 2K-Klebstoffe auf Polyurethan(PU)-Basis zu entwickeln. Hier wäre jedoch als nachteilig anzusehen, dass von ihnen wegen des Gehaltes an niedermolekularen (in erster Linie monomeren) Isocyanaten eine gesundheitliche Gefahr für den Anwender ausgeht, und es besteht eine Notwendigkeit zur Kennzeichnung gemäß CLP-Verordnung.

DE 100 55 786 beschreibt bei Raumtemperatur feste Schmelzkleber mit in einen zweistufigen Verfahren gewonnenen Präpolymeren mit Isocyanat-Endgruppen. DE 10 2009 046 050 A1 beschreibt Polyurethanklebstoffe mit Polyurethanpräpolymeren bestimmter Molekulargewichte, DE 10 2007 052 207 A1 Polyurethanklebstoff mit trocknenden und/oder halbtrocknenden Ölen, EP 1 439 155 A1 beschreibt unter Aufschäumen polymerisierende Reaktionsmörtel und EP 2 062 926 A1 beschreibt Polyurethanpolymere mit sterisch gehinderten Harnstoffgruppen.

Vor diesem Hintergrund besteht die Aufgabe, einen kennzeichnungsfreien, schnell aushärtenden Klebstoff mit hoher Haltekraft, in zweckgemäßer Konfektionierung, insbesondere zum Verbinden zweier Materialien (Gegenstände und Substrate) mit der Maßgabe, dass die Verbindung wieder lösbar ist und vorzugsweise rückstandsfrei entfernt werden kann, ohne die Substrate (z.B. Fliesen oder Kacheln in Bad oder Küche) zu zerstören, bereitzustellen. Insbesondere besteht ein Bedarf an vor allem für Endverbraucher einfach zu handhabenden Klebstoffsystemen zur chemischen Befestigung bzw. zum Festkleben, wie beispielsweise zum Festkleben von Schwimmbad-, Zimmer- oder insbesondere Badezimmer- oder Küchenaccessoires oder Adapterelementen zur Aufnahme dieser Accessoires, wie Haken, Behältern für Seife (z.B. Seifenschalen), Behälter für Kosmetika oder flüssige Shampoos oder Waschflüssigkeiten, Spiegelhaltern, Haltern für elektrische Geräte wie Haartrockner, Rasierer, elektrische Bürsten oder elektrische Zahnbürsten, (z.B. Zahnputz-) Becherhaltern, Flaschenhaltern, Handtuchhaltern, Haltegriffen oder dergleichen mehr, um einen festen Halt in Bohrlöchern oder vorzugsweise direkt auf (beispielweise verfliesten oder gekachelten) Wänden, Böden oder Decken oder anderen Raumelementen (aus vorzugsweise jeweils saugfähigen oder insbesondere nichtsaugfähigen Materialien oder mit vorzugsweise jeweils saugfähigen oder insbesondere nichtsaugfähigen (zu verklebenden) Oberflächen) zu ermöglichen, bei guter Anhaftung und mit hohen Zugfestigkeiten, jedoch vorzugsweise mit im Bedarfsfall guter und rückstandsfreier Ablösbarkeit.

Diese Systeme müssen eine rasche Aushärtung bei Anwendung und gleichzeitig einfache Anwendbarkeit in geeigneter Portionierung ermöglichen.

Es wurde nun gefunden, dass mehr-, insbesondere zweikomponentige Klebstoffsysteme mit einer Komponente (Kunstharzkomponente) auf der Basis von destillierten Isocyanat-Präpolymeren, die somit einen geringen Gehalt an (gemäß der REACH- und CLP-Verordnung der EU möglichst zu vermeidenden) Isocyanatgruppen tragenden Monomeren aufweisen, und einer zweiten Komponente (Härterkomponente), die funktionelle Gruppen in Form von Aminogruppen, Hydroxygruppen und/oder Mercaptogruppen tragenden organischen Verbindungen als Härter beinhaltet; wie Amine, Alkohole oder Mercaptane, insbesondere Di- oder Polyamine, Di- oder Polyaminoalkohole, Di- oder Polyhydroxyverbindungen, Di- oder Polymercaptane, oder Mischungen davon; wobei jeweils im Durchschnitt mehr als eine der genannten funktionellen Gruppen je Molekül der organischen Verbindung vorhanden sind, vorzugsweise 2 oder mehr, z.B. 2 oder 2.1 bis jeweils 5 solche funktionellen Gruppen, zu überraschend guter Verarbeitbarkeit, geeigneter Konfektionierbarkeit und überraschend guter Haltekraft und überraschend gutem Haftungsvermögen und insbesondere bei Bedarf guter und vorzugsweise rückstandsfreier Ablösbarkeit führt.

Die Erfindung betrifft somit, wie in Anspruch 1 definiert, in einer ersten Ausführungsform ein mehr-, insbesondere zweikomponentiges Klebstoffsystem für Befestigungszwecke im Baubereich und vorzugsweise als Klebstoff im Heimwerkerbereich, insbesondere wie eingangs definiert, wie insbesondere zum Festkleben von Gegenständen insbesondere wie eingangs und nachfolgend näher definiert, beispielsweise an Substraten (insbesondere deren Oberflächen) mit vorzugsweise glatten, beispielsweise jeweils glasierten oder anderweitig glattflächigen, jedenfalls saugfähigen oder vorzugsweise nichtsaugfähigen (zu verklebenden) Oberflächen, beispielsweise aus Kunststoff, Glas, Metall, Glasur, Beton, Mauerwerk, Anstrichen, Verputzen oder Keramik bestehenden oder damit beschichteten Materialien, insbesondere (vorzugsweise jeweils glasierten oder anderweitig glattflächigen) Fliesen, Kacheln, Metall-, Kunststoff- und/oder Keramikteilen (wie bei Badewanne, Bidet, Toilettenschüsseln, Pissoirs, Spiegeln, Kunststoffschränken oder -wandschränken, Becken von Schwimmbädern oder Waschbecken), welches in Form eines Kits als Folienbeutel mit mehreren, insbesondere zwei, Kammern in Form von zwei oder mehr miteinander (insbesondere als ein Folienbeutel mit ein oder mehreren Trennwänden zwischen den Kammern) verbundenen folienumhüllten Kammern, welche jeweils eine reaktionshindernd getrennte Aufbewahrung von sonst bei Mischung miteinander reagierenden Komponenten ermöglichen oder gewährleisten, wobei der Folienbeutel die folienumhüllten Kammern ausformt und wobei der Inhalt (die Komponenten) von zwei oder mehr miteinander zu einem Folienbeutel verbundenen folienumhüllten Kammern durch Zerstörung einer inneren Sollbruchstelle zwischen den folienumhüllten Kammern unter Vereinigung der Innenräume der folienumhüllten Kammern miteinander im Anwendungsfall innerhalb des die folienumhüllten Kammern bildenden Folienbeutels gemischt werden kann bzw. im Anwendungsfall gemischt wird, oder in Form einer Kartusche (insbesondere mit verbundenem oder verbindbarem Statikmischer) mit zwei oder mehr Kammern, welche jeweils eine reaktionshindernd getrennte Aufbewahrung der sonst bei Mischung miteinander reagierenden Komponenten ermöglichen, wobei das Klebstoffsystem eine Komponente beinhaltet, die ein destilliertes (= durch Abdestillation von kleinmolekulaten (wie monomeren) Isocyanaten behandeltes) Isocyanat-Präpolymer mit einem Restgehalt an monomeren Isocyanaten von unter 1 Gew.-%, vorzugsweise von 0.5 Gew.-% oder weniger, insbesondere von 0,1 Gew.-% oder weniger, einen Gehalt an (noch übrigen, freien) reaktionsfähigen Isocyanatgruppen von 3 bis 25 Gew.-%, insbesondere von 4-20 Gew.-%, vorzugsweise von 5 bis 15 Gew.-%, und eine Viskosität des Isocyanat-Präpolymers (als solchem) von 0 bis 200.000 mPa*s (jeweils bei 23 °C, Messung wie unten genauer definiert) oder weniger, insbesondere von 2.000 bis 125.000 mPa*s, ganz besonders bevorzugt von 10.000 bis 120.000 mPa*s (Isocyanat-Präpolymer-Komponente); und eine weitere Komponente mit einem Härter (Härterkomponente), wie ebenfalls in Anspruch 1 definiert.

Für die Bestimmung des Isocyanat-Gehalts (Gehalt an noch reaktionsfähigen Isocyanatgruppen im Präpolymeren) werden zunächst ca. 2,0 g der Probe in Essigsäureethylester gelöst. Anschließend werden 3 mL Dibutylamin, 30 mL Ethanol sowie 2-3 Tropfen Bromphenolblaulösung zugegeben und mit 0,5 M HCl-Lösung von blau nach grün titriert. Über die Differenz aus dem Verbrauch an HCl des Blindwerts und dem Verbrauch an HCl der Probe lässt sich der Anteil an Isocyanat berechnen.

$$\text{NCO - Gruppen in } \% = \frac{(A - B) \cdot C \cdot 42{,}02 \cdot 100}{\text{Einwaage in g} \cdot 1000}$$

A           = Verbrauch HCL-Lsg. in ml des Blindwertes
B           = Verbrauch HCl-Lsg. in ml der Probe
C           = Molarität der HCL-Lsg.
42,02     = Molgewicht der NCO-Gruppe

Die Viskosität des Isocyanat-Präpolymers wurde mit Hilfe eines Brookfield Rheometers DV3T Extra und Spindel 7 bei 10 U/min bei 23 °C bestimmt.

Der Restmonomergehalt der Isocyanatpräpolymere wird mittels einer HPLC-Methode bestimmt entsprechend der Firmenschrift von Agilent Technologies "Determination of diisocyanates in plastics used in textile products using the agilent 64410B LC/MS/MS". Dazu wird eine 0,4 %-ige Lösung des Präpolymers in Dichlormethan hergstellt und mit n-Dibutylamin oder 1-(2-Methoxyphenyl)piperazin für 60 min derivatisiert. Die Separation erfolgt mit Hilfe der in der nachfolgenden Tabelle 1 aufgeführten Bedingungen:

**Tabelle 1: Messbedingungen zur Bestimmung des Restmonomergehalts mittels HPLC**

| HPLC | Agilent 1200 HPLC System |
|---|---|
| Säule | Aiglent Zorbax Eclipse SB-C18 RRHT Column, 2,1 X 50 mm, 1,8 μm |

(fortgesetzt)

| Säulen temperatur | 40°C | |
|---|---|---|
| Injektionsvolumen | 2 μL | |
| mobile Phase | A = Acetonitril mit 0,1 % Ameisensäure<br>B = 0,05 mM Ameisensäure | |
| Flussrate | 0,25 mL/min | |
| Gradient | Zeit (min)<br>0<br>0,5<br>10<br>13 | Gradient (% A)<br>60<br>60<br>100<br>100 |
| Detektion | Agilent 6410B Triple Quadrupol | |
| Au fnahmemodu s | ESI positiver Ionen Modus | |
| Gastemperatur | 320 °C | |
| Flussrate | 10 L/min | |
| Druck | 50 psi | |
| Spannung | 3000 V | |

Es wurde überraschend auch gefunden, dass ein höherer als der angegebene Gehalt an Isocyanatgruppen im Präpolymeren als vorstehen angegeben zu spröde, zu hoch viskose und damit schlecht mischbare und außerdem schlecht wieder ablösbare Klebstoffsysteme bedingt, während ein niedriger als angegebener Gehalt an Isocyanatgruppen zu weiche Klebstoffsysteme mit zu geringen Adhäsionskräften/Haltewerten bedingt. Härte, Vernetzungsdichte und Vernetzungsgeschwindigkeit können auch über die Härterzusammensetzung moderat variiert werden, doch werden diese Eigenschaften hauptsächlich durch die Auswahl von erfindungsgemäßen Isocyanatpolymeren bedingt.

Die Erfindung betrifft auch die Verwendung eines vor- und nachstehend definierten Klebstoffsystems zur Befestigung von Verankerungselementen in Löchern oder Spalten, oder vorzugsweise zum Festkleben von Gegenständen wie vor- und nachstehend definiert, insbesondere aus nichtsaugenden Materialien, beispielsweise in Löchern oder Spalten davon, oder vorzugsweise einfach auf der jeweiligen Oberfläche eines Substrates. Die besondere Eignung zur schnellen Verklebung nichtsaugfähiger Gegenstände und Substrate schließt eine Eignung zur Verklebung saugfähiger Gegenstände und/oder Substrate mit einem erfindungsgemäßen Klebstoffsystem nicht aus, wie auch die Verklebung von saugfähigen mit nichtsaugfähigen Materialien. Auch ein diese Verwendung beinhaltendes Verfahren zum Festkleben von Gegenständen oder ferner zur Befestigung von Verankerungselementen in einem Bausubstrat ist ein Erfindungsgegenstand.

Im Rahmen der Verwendung oder des Verfahrens werden die Komponenten eines erfindungsgemäßen Klebstoffsystems durch Öffnen der inneren Sollbruchstelle des Folienbeutels, insbesondere durch Drücken auf den Folienbeutel und/oder Aufrollen des Folienbeutels und Walken, miteinander in Kontakt gebracht und unter (quasi massierendem) Drücken (Walken) des Folienbeutels miteinander vermischt und anschließend durch Öffnen eines zu öffnenden Bereiches des Folienbeutels, insbesondere in Form einer weiteren Sollbruchstelle, nach außen geleitet und so in oder vorzugsweise auf mindestens eines der jeweils zu verklebenden Materialien aufgebracht (vorzugsweise nach Reinigen der jeweiligen Oberflächen, beispielsweise durch Abwischen, Abwaschen mit einem entfettenden Mittel oder Kombinationen davon). Als Offenbarung nur für Referenzzwecke erfolgt die Mischung und Aufbringung ferner alternativ mittels einer Mehrkammerkartusche und eines Statikmischers. Die zu verklebenden Materialien werden zum Verkleben über den aufgebrachten Kleber miteinander in Kontakt gebracht.

Bei der Verwendung oder den Verfahren können die zu verklebenden Oberflächen über die ganze gemeinsame Fläche oder auch nur bereichsweise mit der Mischung aus dem Klebstoffsystem beaufschlagt werden.

Die vor- und nachstehend genannten spezifischeren Definitionen einzelner, mehrerer oder aller Merkmale eines Erfindungsgegenstandes können zum Ersetzen spezifischerer Merkmale genutzt werden, was zu bevorzugten Erfindungsgegenständen (Erfindungsausführungsformen) führt, die ebenfalls Gegenstand der vorliegenden Erfindungsoffenbarung sind.

Als Gegenstände, die an Substrate verklebt werden können, sind insbesondere Schwimmbad-, Zimmer-, Badezimmer- (was Toilettenraum einschließt) und oder Küchenaccessoires oder Adapterelemente zur Aufnahme dieser Accessoires zu nennen, wie vor allem Haken (beispielsweise für Lappen), Behälter für Seife (z.B. Seifenschalen), Behälter für Kosmetika oder flüssige Shampoos oder Waschflüssigkeiten, Spiegelhalter, Halter für elektrische Geräte wie Haartrockner, Rasierer, elektrische Bürsten oder einfache (handbetriebene) oder elektrische Zahnbürsten, (z.B. Zahnputz-) Becherhalter, Flaschenhalter, Handtuchhalter, Haltegriffe oder dergleichen mehr zu nennen.

Als Substrate, an die (insbesondere an deren Oberflächen) derartige Gegenstände angeklebt werden können, sind insbesondere solche (insbesondere deren Oberflächen) mit vorzugsweise glatten, beispielsweise jeweils glasierten oder anderweitig glattflächigen, saugfähigen oder insbesondere nichtsaugfähigen (zu verklebenden) Oberflächen zu nennen, beispielsweise solche aus Kunststoff, Glas, Metall, Glasur, Beton, Mauerwerk, Anstrichen, Verputzen oder Keramik oder damit beschichteten Materialien, insbesondere (vorzugsweise jeweils glasierte oder anderweitig glattflächige) Fliesen, Kacheln, Metall-, Kunststoff- und/oder Keramikteile (wie bei Badewanne, Bidet, Toilettenschüsseln, Pissoirs, Spiegeln, Kunststoffschränken oder -wandschränken, Becken von Schwimmbädern, oder Waschbecken).

Als saugfähige Materialien (hier und vor- und nachstehend als Oberbegriff für Gegenstände und Substrate verwendet) sind beispielsweise solche zu nennen wie poröses Mauerwerk, poröser Beton, gebrannter Ton, wie Ziegel, textile Materialien (wie Bezüge), Leder oder Holz oder dergleichen.

Unter saugfähig, wie saugfähigem Material, ist hierbei zu verstehen, dass ein diese Bedingung erfüllendes Substrat auf Grund seiner natürlichen/vorhandenen Porosität oder chemischen Zusammensetzung Wasser gespeichert hat, welches für eine Aushärtung direkt zur Verfügung steht und über die gesamte Substratfläche an die dünne Klebstoffschicht abgegeben wird. Dies bedingt eine schnelle Aushärtung.

Bei nichtsaugfähigen Materialien steht dagegen kein gespeichertes Wasser zur Verfügung, welches über die Klebeflächen abgegeben werden könnte. Ein Aushärtemechanismus, der über Feuchtigkeit reguliert ist, würde deshalb sehr lang dauern, da bei nichtsaugenden Substraten die Feuchtigkeitsaufnahme nur über die Stöße der Verklebung (und nicht über die Fläche) möglich ist.

Die Diffusion verläuft entsprechend langsam und folglich auch die Aushärtung.

Gerade bei nichtsaugfähigen Substraten und deren somit nicht wassherspeichernden und zur Abgabe von Wasser befähigten Oberflächen besteht die Aufgabe, schnelle Verklebungen zu ermöglichen. Viele Klebstoffe härten jedoch durch Feuchtigkeitsaufnahme aus. Bei saugfähigen Untergründen ist dies kein Problem, da diese zuvor meist genügend Wasser aufgenommen haben und dieses bei der Härtung wieder zur Verfügung stellen können.

Als nichtsaugfähige Materialien sind beispielsweise solche zu nennen, , wie (mindestens an der für das Verkleben vorgesehenen Oberfläche) glatte Materialien, die bei Benetzung oder Berührung mit Wasser (oder ferner den erfindungsgemäßen Klebstoffen) diese(s) nicht aufnehmen, wie Kunststoff, Glas, Metall, Glasuren, glatter Beton, Anstriche (wie Lacke), Keramik oder ferner porenfreies Mauerwerk oder (insbesondere lipophile) Verputze zu nennen.

Das Gewichtsverhältnis von Isocyanat-Präpolymer-Komponente und Härter liegt vorzugsweise bei 1:1 bis 10:1, vorzugsweise bei 1:1 bis 5:1, beispielsweise bei 3:1.

Vorzugsweise liegt in allen Ausführungsformen der Erfindung der Gehalt an destilliertem Isocyanat-Präpolymer, bezogen auf die Gesamtmasse der Komponente des erfindungsgemäßen zweikomponentigen Klebstoffsystems mit dem Isocyanat-Präpolymer, (ohne Folie und ohne andere Verpackung) bei 30 bis 100 Gew.-%, bevorzugt 50 bis 100 Gew.-%, besonders bevorzugt 80 bis 100 Gew-%, insbesondere 90 bis 100 Gew.-%.

Der Gehalt an Aminen, Alkoholen oder Mercaptanen, insbesondere Polyolen, in der Härterkomponente, bezogen auf deren gesamte Masse (ohne Folie und ohne andere Verpackung), liegt in allen Ausführungsformen der Erfindung vorzugsweise bei bis 100 Gew.-%, bevorzugt bei 30 bis 100 Gew.-%, insbesondere bei 40 bis 95 Gew.-%.

Das E-Modul des ausgehärteten Klebstoffs liegt in allen Ausführungsformen der Erfindung bevorzugt bei 0 bis 1000 MPa bei einer gleichzeitigen Bruchdehnung von 0 bis 300 %, insbesondere liegt das E-Modul bei 10 bis 100 MPa, bei einer gleichzeitigen Bruchdehnung von 1 bis 200 % und ganz besonders bevorzugt weist der Klebstoff ein E-Modul von 15 bis 150 MPa auf, bei einer Bruchdehnung von 5 bis 150 %. Die Zugfestigkeit des ausgehärteten Klebstoffs liegt bevorzugt bei 0,5 bis 50 MPa, insbesondere bei 1 bis 40 MPa und besonders bevorzugt bei 2 bis 10 MPa.

Die vor- und nachstehende mechanische Charakterisierung erfolgt nach DIN ISO 527 (Prüfkörper Typ 1BA) nach 24 h Aushärtezeit bei einer Temperatur von 23 °C mit einer Universalprüfmaschine Z010 von Zwick GmbH & Co. KG (BT1-FR010TH.A50).

Wo Gewichtsangaben in Prozent (Gew.-%) gemacht werden, beziehen sich diese, wenn nichts anderes gesagt ist, auf die Gesamtmasse (Isocyanatkomponente + Härterkomponente) der Reaktanden und Zusätze aller (im fertig formulierten Zustand flüssigen oder pastösen) Komponenten des Klebstoff-Systems, also ohne Verpackung, d.h. die Masse des oder der gesamten zugehörigen Komponentenbestandteile.

Wo "basierend auf" oder "auf Basis" steht, bedeutet dies beispielsweise, dass der betreffende Bestandteil einer Komponente 30 oder mehr als 30, insbesondere 50 oder mehr als 50, vorzugsweise 60 oder mehr als 60, wie mehr als 70 Gew.% bis zu jeweils 100 Gew.-% (bezogen auf den jeweiligen Bestandteil, z.B. "Isocyanat-Präpolymer-", "Härter") der nach "basierend auf" oder "auf Basis von" genannten Stoffe aufweist.

"Beinhalten" oder "umfassen" bedeutet, dass neben den genannten Komponenten oder Merkmalen noch andere vorhanden sein können, steht also für eine nicht abschließende Aufzählung, im Gegensatz zu "enthalten", das eine abschließende Aufzählung der bei seiner Verwendung aufgezählten Komponenten oder Merkmale bedeutet. In besonderen Ausführungsformen der Erfindungsgegenstände kann anstelle von "beinhalten" oder "umfassen" "bestehend aus" eingesetzt werden.

Bei den Verankerungselementen handelt es sich insbesondere um flächig zu befestigende Elemente wie z.B. Adapter etc. (insbesondere aus saugfähigen oder vorzugsweise nichtsaugfähigen Materialien wie oben definiert oder ferner um Schrauben oder Gewindebolzen, ferner kann es sich auch um Nägel oder andere stiftförmige Verbindungselemente handeln.

Neben den genannten Bestandteilen kann ein erfindungsgemäßes bzw. erfindungsgemäß zu verwendendes Kunstharz in ein oder mehreren der Komponenten auch weitere übliche Bestandteile beinhalten.

Wo das Attribut "ferner" erwähnt wird, bedeutet dies, dass Merkmale ohne dieses Attribut stärker bevorzugt sind.

Die erfindungsgemäßen Klebstoffsysteme führen beim Aushärten im Rahmen der Anwendung zu Polyurethanen, Polyharnstoffen, Polyurethan/Polyharnstoff-Mischpolymeren, und/oder entsprechenden Thioverbindungen. Polyurethane sind besonders bevorzugt.

Bei den erfindungsgemäßen bzw. erfindungsgemäß zu verwendenden Isocyanat-Präpolymeren handelt es sich insbesondere um durch Umsetzung mit Polyolen mit mehr-, insbesondere difunktionellen Isocyanaten ("Monomere", was einen herstellungsbedingten Restgehalt (z.B. 5 Gew.-% oder weniger) an Oligomeren nicht ausschließt) wie z.B. MDI, besonders bevorzugt TDI herstellbare bzw. hergestellte.

Als Polyole dienen dabei mehr-, insbesondere difunktionelle Polyole wie z.B. Polyesterpoylole oder besonders bevorzugt Polyalkylenglykolpolyole wie Polyethylenglykol-, Polypropylenglykol- oder Polytetramethylenglykol-Polyole.

Die Isocyanat-Präpolymere sind vorzugsweise herstellbar bzw. insbesondere hergestellt durch Reaktion der Polyole mit einem molaren Überschuss an den Isocyanaten, im molaren Verhältnis von NCO:OH-Gruppen von vorzugsweise 1,2 bis 3:1, besonders bevorzugt nahe 2:1, danach Abdestillieren von überschüssigen Isocyanat-Monomeren auf einen Gehalt < 1 %, z.B. 0,5 % und ganz besonders bevorzugt < 0,1 %, z.B. durch Hochvakuum- oder Dünnschichtdestillation. Vorzugsweise geschieht die Reaktion (in weiterer Abgrenzung zu der mehrstufigen Reaktion in DE 100 55 786 A1), in einer Reaktionstufe ohne weitere Umsetzung, d.h., das Reaktionsprodukt "Isocyanat-Präpolymer" wird nicht (mit vorherigem Entfernen noch vornandener Isocyanat-Restmonomere) in einer zweiten Reaktion eines Teils der noch vorhandenen Isocyanatgruppen mit Di- oder Polyol unter Bildung eines weiteren Präpolymeren mit weniger Isocyanatgruppen umgesetzt.

Die für die Isocyanat-Präpolymeren zum Verkleben erforderlichen Härter wie Amine, Alkohole oder Mercaptane, insbesondere Di- oder Polyamine, Di- oder Polyaminoalkohole, Di- oder Polyhydroxyverbindungen, Di- oder Polymercaptane, oder Mischungen davon; sind bekannt, beispielsweise entsprechen sie den in der WO 02/079341 und der WO 02/079293 genannten Di- oder höherwertigen Alkoholen, Mercaptanen, Aminen usw., so dass diese Quellen hier als Referenz dienen können.

Di- oder höherfunktionale Alkohole sind beispielsweise zwei- oder höherfunktionale Alkohole, insbesondere Polyole (Di- oder höherfunktionale Alkohole) sind dabei insbesondere zwei- oder höherfunktionale Alkohole, z.B. Folgeprodukte des Ethylen- oder Propylenoxids, wie Ethandiol, Di- bzw. Triethylenglykol, Propan-1,2- oder -1-3-diol, Dipropylenglykol, andere Diole, wie 1,2-, 1,3- oder 1,4-Butandiol, 1,6-Hexandiol, Neopentylglykol, 2-Ethylpropan-1,3-diol oder 2,2-Bis(4-hydroxycyclohexyl)-propan, Triethanolamin, Bisphenol A oder Bisphenol F oder deren Oxyethylierungs-, Hydrierungs- und/oder Halogenierungsprodukte, höherwertige Alkohole, wie z.B. Glycerin, Trimethylolpropan, Hexantriol und Pentaerythrit, hydroxylgruppenhaltige Polyether, z.B. Oligomere aliphatischer oder aromatischer Oxirane und/ oder höherer cyclischer Ether, z.B. von Ethylenoxid, Propylenoxid, Styroloxid und Furan, Polyether mit jeweils endständigem Hydroxy, die in der Hauptkette aromatische Struktureinheiten enthalten, z.B. die des Bisphenol A bzw. F, hydroxylgruppenhaltige Polyester auf der Basis der oben genannten Alkohole bzw. Polyether und Dicarbonsäuren bzw. ihrer Anhydride, z.B. Adipinsäure, Phthalsäure, Isophthalsäure, Terephthalsäure, Tetra- bzw. Hexahydrophthalsäure, Endomethylentetrahydrophthalsäure, Tetrachlorphthalsäure oder Hexachlor-endomethylen-tetrahydrophthalsäure, Maleinsäure, Fumarsäure, Itaconsäure, Sebacinsäure oder dergleichen. Besonders bevorzugt sind Niederalkandiole (ergeben divalente Reste -O-Niederalkylen-O-), oder Bioalkohole, wie Rizinusöl, vorzugsweise z.B. Folgeprodukte des Ethylen- oder Propylenoxids, wie Ethandiol, Di- bzw. Triethylenglykol, Polyether mit jeweils endständigem Hydroxy, die in der Hauptkette aromatische Struktureinheiten enthalten, z.B. die des Bisphenol A bzw. F, Rizinusöl, oder ferner sonstige Bioalkohole oder dergleichen.

Di- oder Polyaminoalkohole sind Verbindungen, die insbesondere eine oder mehrere Hydroxy- und eine oder mehrere Aminogruppen in ein und demselben Molekül enthalten. Bevorzugte Beispiele sind aliphatische Aminole, wie Ethanolamin, Diethanolamin, Triethanolamin oder 3-Aminopropanol, oder aromatische Aminole, wie 2-, 3- oder 4-Aminophenol.

Die Di- oder Polymercaptane werden bevorzugt aus der Gruppe der ethoxylierten und/oder propoxylierten Alkohole aus Mono-, Di-, Tri-, Tetra-, Pentaolen und/oder anderen Polyolen mit Thiolend-gruppen (z.B. Capcure 3-800 der Firma Cognis) und/ oder aus der Gruppe der Estergruppen beinhaltenden Thiolen ausgewählt. Beispielsweise kann es sich um Ester von $\alpha$-Mercaptoacetat oder $\beta$-Mercaptopropionat mit Diolen, Triolen, Tetraolen, Pentaolen oder anderen Polyolen handeln.

Wichtige Beispiele für mögliche weitere Inhaltsstoffe (Bestandteile oder Zusätze) für die Isocyanat-Präpolymerhaltige Komponente und die Härterkomponente sind insbesondere Beschleuniger, Inhibitoren, Stabilisatoren, reaktive Verdünner, Thixotropiermittel, Füllstoffe und sonstige Additive.

Als Beschleuniger kommen solche mit hinreichend hoher Aktivität in Frage, wie Schwermetallsalze, organische Zinn-, Titan-, Bismut- und Antimonverbindungen oder dergleichen; oder aminische Beschleuniger. Ein oder mehrere derartige Beschleuniger sind möglich. Die Beschleuniger haben, vorzugsweise einen Anteil (Konzentration) von 0,005 bis 10, insbesondere von 0,1 bis 5 Gew.-%. Besonders bevorzugt sind DABCO (1,4-Diazabicyclo[2.2.2]octan), Dibutylzinndilaurat oder DBU.

Als Stabilisatoren können beispielsweise HALS-Stabilisatoren wie beschrieben in "Polyurethane, Kunststoff Handbuch", Kapitel 3.4.8 Alterungsschutzmittel, S. 121, 3. Auflage, 1993, hrsg. Gerhard W. Becker und Dietrich Braun, Carl Hanser Verlag München Wien genannt werden, wie insbesondere 1-oxyl-2,2,6,6-tetramethylpiperidin-4-ol ("4-OH-TEMPO"), oder sterisch gehinderte Phenole (4,4'-Di-octyl-diphenylamin) wie Cresole (2,6-Di-tert-butyl-p-cresol). Der Gewichtsanteil der Stabilisatoren liegt vorzugsweise im Bereich von 0,1 ppm bis 2 Gew.-%, vorzugsweise im Bereich von 1 ppm bis 1 Gew.-%.

Als Thixotropiermittel können übliche thixotropieverursachende Rheologiehilfsmittel verwendet werden, wie pyrogene Kieselsäure. Sie können z.B. in einem Gewichtsanteil von 0,01 bis 50 Gew.-%, beispielsweise von 1 bis 20 Gew.-%, zugesetzt werden.

Als Füllstoffe finden übliche Füllstoffe, insbesondere Zemente (z.B. Portlandzemente oder Tonerdeschmelzzemente), Kreiden, Sand, Quarzsand, Aluminiumsilikate, Quarzmehl oder dergleichen, die als Pulver, in körniger Form oder in Form von Formkörpern zugesetzt sein können, Verwendung, oder andere, wie beispielsweise in WO 02/079341 und WO 02/079293 genannt, oder Gemische davon, wobei die Füllstoffe ferner oder insbesondere auch silanisiert sein können. Die Füllstoffe können in einer oder in mehreren Komponenten eines erfindungsgemäßen Klebstoffsystems, beispielsweise einer oder beiden Komponenten eines entsprechenden Zweikomponentenkits, vorhanden sein. Zusätzlich oder alternativ können hydraulisch härtbare Füllstoffe, wie Gips (z.B. Anhydrit), Branntkalk oder Zement (z.B. Tonerde- oder Portlandzement), Wassergläser oder aktive Aluminiumhydroxide, oder zwei oder mehr davon, als Füllstoff zugesetzt werden. Die Füllstoffe können in beliebigen Formen vorliegen, beispielsweise als Pulver oder Mehl, oder als Formkörper, z.B. in Zylinder-, Ring-, Kugel-, Hohlkugel-, Plättchen-, Stäbchen-, Sattel- oder Kristallform, oder ferner in Faserform, und die entsprechenden Grundteilchen haben vorzugsweise einen maximalen Durchmesser von 0,0001 bis 10 mm. Der Anteil an Füllstoffen beträgt vorzugsweise 0 bis 90 Gew.-%, beispielsweise 10 bis 90 Gew.-%.

Auch weitere Additive (Zusätze) können zugesetzt sein, wie Trockenmittel (Bsp. Zeolith), Weichmacher, wie Phthalsäure- oder Sebacinsäureester, nicht reaktive Verdünnungsmittel (z.B. Lösungsmittel, wie Niederalkylketone, z.B. Aceton, Diniederalkyl-niederalkanoylamide, wie Dimethylacetamid, Niederalkylbenzole, wie Xylole oder Toluol, oder Paraffine, oder Wasser), Flexibilisatoren, Stabilisatoren, Rheologiehilfsmittel, Netzmittel, Pigmente oder Farbstoffe, oder Gemische von zwei oder mehr dieser Additive, oder dergleichen. Derartige weitere Zusätze können vorzugsweise insgesamt in Gewichtsanteilen von insgesamt 0 bis 90 %, beispielsweise von 0 bis 40 Gew.-%, zugesetzt sein.

Als Material für einen erfindungsgemäßen bzw. erfindungsgemäß verwendbaren Folienbeutel können () Kunststoffe Verwendung finden, wie kompostierbare Kunststoffe, z.B. auf Basis von Stärke, Polyester, Polyesteramide, Polyurethane, Polivinylalkohole, Cellulose, Lignocellulose, Polymilchsäure, Polyhydroxyalkanoate, oder Mischungen von zwei oder mehr derartigen Materialien, in Frage. Bevorzugt sind wasser-, feuchtigkeits- und wasserdampfdichte Materialien, insbesondere solche, die (z.B. durch Aufdampfen) metallisiert sind und/oder Verbundfolien aus einer Kunststoff- und einer Metall-, insbesondere Aluminium-Folie sind.

Spezifische Ausführungsformen der Erfindung betreffen auch die in den Ansprüchen aufgeführten Varianten - die Ansprüche werden hier daher durch Bezugnahme aufgenommen.

Es zeigen:

Figur 1 (Fig. 1): Schematische Darstellung eines erfindungsgemäßen Folienbeutels;

Figur 2 (Fig. 2): Entwicklung der Zugscherfestigkeit über die Zeit aufgetragen innerhalb der ersten 24 Stunden nach Beginn der Aushärtung für Rezepturen aus Beispiel 1, 2, 3.

Die nachfolgenden Beispiele dienen der Illustration der Erfindung, ohne ihren Umfang einzuschränken: Für jegliche Anwendungstests, wenn nicht anders beschrieben, wurden beide Komponenten in einem Folienbeutel (100 mm x 48 mm x 2 bis 5 mm) durch Kneten unter Aufrollen von Hand miteinander gemischt. Anschließend wurde die homogene Masse auf das Substrat aufgebracht.

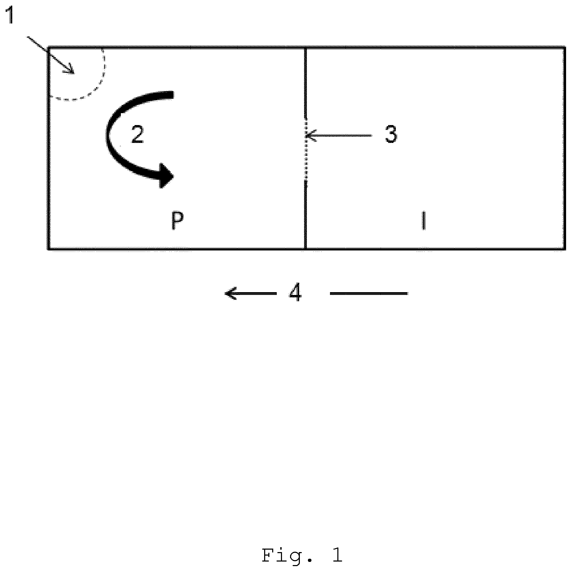

Der Folienbeutel besteht aus einer Verbundfolie und besitzt ein 2-Kammersystem. Ein Beispiel für einen solchen Folienbeutel wird in Fig. 1 gezeigt. Die zwei Kammern (**P** für Härterkomponente, I für Isocyanatkomponente mit Präpolymer) sind durch eine innere Sollbruchstelle **3** voneinander getrennt. Durch Aufrollen des Beutels (in Fig. 1 in Rollrichtung 4) wird die innere Sollbruchstelle **3** geöffnet und beide Komponenten können durch Kneten (Walken) von Hand im Mischbereich 2 miteinander gemischt werden. Durch Öffnen der Sollbruchstelle für Öffnung **1** gelangt die Mischung nach außen und wird auf eine zu verklebende Oberfläche aufgetragen.

Die Endfestigkeit nach 24 h wird mit Hilfe der Zugscherfestigkeit nach DIN EN ISO 4587 bestimmt. Dazu werden sandgestrahlte Stahlprüfkörper (100 x 25 x 2 mm) verklebt (Klebefläche 13 x 25 mm) und nach 24 h Aushärtezeit bei einer Temperatur von 23 °C mit einer Universalprüfmaschine Z010 von Zwick GmbH & Co. KG (BT1-FR010TH.A50) getestet.

Zur Ermittlung der Anfangshaftung wurde eine zweifach gelochte Adapterplatte aus Stahl (Abmessung: 3,5 cm x 2,0 cm, 25,5 g) mit der entsprechenden Rezeptur bestrichen und auf eine lasierte, entfettete Fliese geklebt. Haftet die Adapterplatte ohne zusätzliche Fixierung an der senkrechten gestellten Fliese, wird diese mit einer guten Anfangshaftung bewertet. Findet ein Abrutschen der Adapterplatte statt, wird die Anfangshaftung als schlecht bewertet.

Zur Beurteilung der Wiederablösbarkeit wurde die aufgeklebte Adapterplatte nach 24 h mit Hilfe einer Spachtel entfernt und überprüft, ob dies ohne Beschädigung der Fliese möglich ist.

Beispiel 1: Rezeptur für Klebstoffsystem

**Tabelle 2: Beispielrezeptur 1, Mischungsverhältnis A:B = 1:2,9**

| Komponente | Bezeichnung | Gew.-% |
|---|---|---|
| A | Triethanolamin | 7,3 |
| | DBTL | 0,05 |
| | Zeolith | 0,45 |
| | Aluminiumsilikat | 8,4 |
| | Farbpaste | 0,1 |
| | Rizinusöl | 4,7 |
| | pyrogene oberflächenbehandelte Kieselsäure | 0,8 |
| B | Isocyanat Präpolymer | 74,7 |
| | pyrogene oberflächenbehandelte Kieselsäure | 3,5 |

[1] TDI-basiert, NCO-Gehalt: 11,1%, Viskosität bei **23 °C,** Spindel 7, 10 U/min in Anlehnung an DIN EN ISO 2555: 94.400 mPa·s, Restmonomergehalt < 0,1 %
DBTL ist Dibutylzinndilaurat.

Beispiel 2: Alternative Zusammensetzung

**Tabelle 3: Beispielrezeptur 2, Mischungsverhältnis A:B = 1:3,2**

| Komponente | Bezeichnung | Gew.-% |
|---|---|---|
| A | Triethanolamin | 8,3 |
| | DABCO (33%) | 0,2 |
| | Zeolith | 0,4 |
| | Aluminiumsilikat | 7,0 |
| | Farbpaste | 0,1 |
| | pyrogene oberflächenbehandelte Kieselsäure | 0,4 |
| B | Isocyanat Präpolymer[2] | 77,7 |
| | pyrogene oberflächenbehandelte | 5,9 |

(fortgesetzt)

| Komponente | Bezeichnung | Gew.-% |
|---|---|---|
| | Kieselsäure | |
| [2] TDI-basiert, NCO-Gehalt: 9,1 %, Viskosität bei 23°C, Spindel 7, 10 U/min in Anlehnung an DIN EN ISO 2555: 14.000 mPa·s, Restmonomergehalt < 0,1 %. | | |

Beispiel 3: Weitere Rezeptur

**Tabelle 4: Beispielrezeptur 3, Mischungsverhältnis A:B = 1:3,1**

| Komponente | Bezeichnung | Gew.-% |
|---|---|---|
| A | Triethanolamin | 7,33 |
| | DABCO (33%) | 0,2 |
| | Zeolith | 0,4 |
| | Aluminiumsilikat | 8,3 |
| | Farbpaste | 0,10 |
| | Rizinusöl | 4,7 |
| | pyrogene oberflächenbehandelte Kieselsäure | 0,9 |
| B | Isocyanat Präpolymer[1] | 50,0 |
| | Isocyanat Präpolymer[2] | 24,7 |
| | pyrogene oberflächenbehandelte Kieselsäure | 3,4 |
| [1] TDI-basiert, NCO-Gehalt: 11,1%, Viskosität bei **23 °C**, Spindel 7, 10 U/min in Anlehnung an DIN EN ISO 2555: 94.400 mPa·s, Restmonomergehalt < 0,1 %<br>[2] TDI-basiert, NCO-Gehalt: 9,1 %, Viskosität bei 23°C, Spindel 7, 10 U/min in Anlehnung an DIN EN ISO 2555: 14.000 mPa·s, Restmonomergehalt < 0,1 %. | | |

Beispiel 4: Leistungsfähigkeit der Beispielrezepturen

**Tabelle 5: Leistungsfähigkeit von Beispielrezepturen**

| Rezeptur | Endfestigkeit nach 24 h | wieder ablösbar von lasierter Fliese | Mischungsverhältnis | Anfangshaftung |
|---|---|---|---|---|
| 1 | 13,2 MPa | ja | 2,9 : 1 | gut |
| 2 | 6,4 MPa | ja | 5,1 : 1 | gut |
| 3 | 7,7 MPa | ja | 3,1 : 1 | gut |
| Epoxid-Kleber (Kraftmix von Pattexextrem fest, Tube) | 14,9 MPa | nein[3] | 1 : 1 | schlecht |
| 2K-SMP (i-Mix) | 2,2 MPa | ja | 10 : 1 | schlecht |
| [3] Zerstörung der Fliese | | | | |

Beispiel 5: Entwicklung der Zugscherfestigkeit

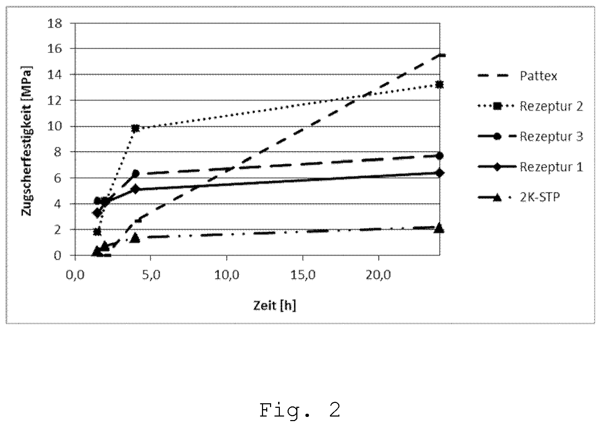

Fig. 2 zeigt die Entwicklung der Zugscherfestigkeit innerhalb der ersten 24 h. Dabei wird deutlich, dass die erfindungsgemäßen Rezepturen bereits nach 1,5 h die Endfestigkeiten der Silanmodifizierten Polymer-Variante übersteigen. Nach 4 h ist nahezu die Endfestigkeit erreicht. wodurch die Verklebung im Gegensatz zur Epoxid-Variante sehr früh belastbar ist.

Beispiel 6: Verkleben auf unterschiedlichen Substraten

Es wurde zudem gefunden, dass eine erfindungsgemäße Rezeptur ebenfalls als Kartuschen-Variante geeignet ist. Dafür wurde eine Kartusche mit einem Mischungsverhältnis von 3:1 (A:B) mit den jeweiligen Komponenten befüllt und mit Hilfe eines Statikmischers ausgepresst. In Tabelle 6 wird deutlich, dass die Rezeptur auch für die Verklebungen unterschiedlicher Substrate sehr gut geeignet ist und die Leistungsfähigkeit handelsüblicher hochfester, auch zweikomponentiger, Klebstoffe (z.B. auf Basis von Epoxidharzen) erreicht oder übertrifft. Tabelle 6 zeigt außerdem, dass sogar auf schwierig zu verklebenden Polyolefinen überraschenderweise gute Zugscherfestigkeiten erreicht werden können.

**Tabelle 6: Beispielrezeptur auf unterschiedlichen Substraten**

| Substrat | Zugscherfestigkeit nach 24h [MPa] |
|---|---|
| Stahl sandgestrahlt | 7,7 |
| PA 6 | 2,8 |
| PVC | 4,3 |
| PMMA | 1,9 |
| Aluminium | 5,8 |
| Aluminium eloxiert | 4,1 |
| Polypropylen | 0,6 |
| Polycarbonat | 7,5 |

Beispiel 7: Weitere Rezeptur

**Tabelle 7: Beispielrezeptur 4, Mischungsverhältnis A:B = 1:4,7**

| Komponente | Bezeichnung | Gew.-% |
|---|---|---|
| A | Triethanolamin | 8,8 |
| | DABCO (33%) | 0,2 |
| | Zeolith | 0,5 |
| | Aluminiumsilikat | 7,4 |
| | Farbpaste | 0,1 |
| | pyrogene oberflächenbehandelte Kieselsäure | 0,4 |
| B | Isocyanat Präpolymer[2] | 82,6 |
| [2] TDI-basiert, NCO-Gehalt: 9,1 %, Viskosität bei 23°C, Spindel 7, 10 U/min in Anlehnung an DIN EN ISO 2555: 14.000 mPa·s, Restmonomergehalt < 0,1 %. | | |

## Patentansprüche

1.  Mehr-, insbesondere zweikomponentiges, Klebstoffsystem für Befestigungszwecke im Baubereich und als Klebstoff im Heimwerkerbereich, mit einer Komponente auf der Basis eines destillierten Isocyanat-Präpolymeren und einer zweiten Komponente, die funktionelle Gruppen in Form von Aminogruppen, Hydroxygruppen und/oder Mercaptogruppen tragende organische Verbindungen als Härter beinhaltet, in Form eines Kits als Folienbeutel mit mehreren Kammern (P,I) in Form von zwei oder mehr miteinander verbundenen folienumhüllten, mit ein oder mehreren Trennwänden zwischen den Kammern versehenen Kammern, welche jeweils eine reaktionshindernd getrennte Aufbewahrung der sonst bei Mischung miteinander reagierenden Komponenten gewährleisten, wobei der Folienbeutel die folienumhüllten Kammern (P,I) ausformt,
wobei das Isocyanat-Präpolymer einen Restgehalt an monomeren Isocyanaten von unter 1 Gew.-%, einen Gehalt an reaktionsfähigen Isocyanatgruppen von 3 bis 25 Gew.-% und eine Viskosität des Isocyanat-Präpolymeren von 200.000 MPa*s oder weniger aufweist, wobei die Viskosität mit Hilfe eines Brookfield-Rheometers DV3T Extra und Spindel 7 10 U/min bei 23 °C bestimmt wird.

2. Klebstoffsystem nach Anspruch 1 in Form eines Kits als Folienbeutel mit zwei Kammern.

3. Klebstoffsystem nach Anspruch 1 oder 2 für Befestigungszwecke im Baubereich.

4. Klebstoffsystem nach Anspruch 1 oder 2 als Klebstoff für den Heimwerkerbereich.

5. Klebstoffsystem nach einem der Ansprüche 1 bis 4, **dadurch gekennzeichnet, dass** das Isocyanat-Präpolymer als solches eine wie in Anspruch 1 beschrieben gemessene Viskosität des Isocyanat-Präpolymers von 2.000 bis 125.000 mPa*s, ganz besonders bevorzugt von 10.000 bis 120.000 mPa*s aufweist.

6. Klebstoffsystem nach einem der Ansprüche 1 bis 4, **dadurch gekennzeichnet, dass** das Isocyanat-Präpolymer einen Restgehalt an monomeren Isocyanaten von 0.5 Gew.-% oder weniger, insbesondere von 0,1 Gew.-% oder weniger; einen Gehalt an reaktionsfähigen Isocyanatgruppen von 4-20 Gew.-%, vorzugsweise von 5 bis 15 Gew.-%, und eine Viskosität des Isocyanat-Präpolymers von 2.000 bis 125.000 mPa*s, ganz besonders bevorzugt von 10.000 bis 120.000 mPa*s aufweist.

7. Klebstoffsystem nach einem der Ansprüche 1 bis 6, wobei die Inhalte von zwei oder mehr miteinander zu einem Folienbeutel verbundenen folienumhüllten Kammern (P,I) durch Zerstörung einer inneren Sollbruchstelle (3) zwischen den folienumhüllten Kammern (P,I) unter Vereinigung der Innenräume der folienumhüllten Kammern miteinander im Anwendungsfall innerhalb des die folienumhüllten Kammern bildenden Folienbeutels gemischt werden, insbesondere durch Aufrollen und Walken des Folienbeutels, und über eine weitere nach außen führende Sollbruchstelle nach deren Öffnen nach außen geleitet und so in oder vorzugsweise auf mindestens eines der jeweils zu verklebenden Materialien aufgebracht wird, und die zu verklebenden Materialien über den aufgebrachten Kleber miteinander in Kontakt gebracht werden.

8. Klebstoffsystem nach einem der Ansprüche 1 bis 7 als Klebstoff im Heimwerkerbereich zum Festkleben von Gegenständen, an Substraten, insbesondere deren Oberflächen, mit vorzugsweise glatten saugfähigen oder nichtsaugfähigen Oberflächen, beispielsweise aus Kunststoff, Glas, Metall, Glasur, Beton, Mauerwerk, Anstrichen, Verputzen oder Keramik bestehenden oder damit beschichteten Materialien, insbesondere (vorzugsweise jeweils glasierten oder anderweitig glattflächigen) Fliesen, Kacheln, Metall-, Kunststoff- und/oder Keramikteilen (wie bei Badewanne, Bidet, Toilettenschüsseln, Pissoirs, Spiegeln, Kunststoffschränken oder -wandschränken, Becken von Schwimmbädern oder Waschbecken).

9. Klebstoffsystem nach Anspruch 8, **dadurch gekennzeichnet, dass** die festzuklebenden Gegenstände aus der Gruppe beinhaltend Haken, Behälter für Seife, Behälter für Kosmetika oder flüssige Shampoos oder Waschflüssigkeiten, Spiegelhalter, Haltern für elektrische Geräte wie Haartrockner, Rasierer, elektrische Bürsten oder handbetriebene oder elektrische Zahnbürsten, Becherhaltern, Flaschenhaltern, Handtuchhaltern und Haltegriffen ausgewählt ist.

10. Verwendung eines Klebstoffsystems nach einem der Ansprüche 1 bis 9 zur Befestigung von Verankerungselementen in Löchern oder Spalten, oder vorzugsweise zum Festkleben von Gegenständen, insbesondere aus nichtsaugfähigen Materialien.

11. Verfahren unter Verwendung eines Klebstoffsystems nach einem der Ansprüche 1 bis 9, wobei die Komponenten des Klebstoffsystems durch Öffnen der inneren Sollbruchstelle eines Folienbeutels, insbesondere durch Drücken auf den Folienbeutel und/oder Aufrollen des Folienbeutels und Walken, miteinander in Kontakt gebracht und unter (quasi massierendem) Drücken (Walken) des Folienbeutels miteinander vermischt und anschließend durch Öffnen eines zu öffnenden Bereiches des Folienbeutels, insbesondere in Form einer weiteren Sollbruchstelle, nach außen geleitet und so in oder vorzugsweise auf mindestens eines der jeweils zu verklebenden Materialien aufgebracht werden,.

**Claims**

1. Multi-component, especially two-component, adhesive system for fixing purposes in the construction sector and as an adhesive in the DIY sector, having a component based on a distilled isocyanate prepolymer and, as hardener, a second component which contains organic compounds carrying functional groups in the form of amino groups, hydroxy groups and/or mercapto groups, in the form of a kit as a foil pouch having a plurality of chambers (P, I) in the form of two or more foil-enclosed chambers which are joined to one another and are provided with one or more partition walls between the chambers, which chambers in each case ensure that the components, which would otherwise react with one another on mixing, are stored separately so as to inhibit reaction, wherein the foil pouch forms the foil-enclosed chambers (P, I),
wherein the isocyanate prepolymer has a residual content of monomeric isocyanates of less than 1 % by weight, a content of reactive isocyanate groups of from 3 to 25 % by weight, and a viscosity of the isocyanate prepolymer of 200 000 MPa*s or less, the viscosity being determined at 23°C with the aid of a Brookfield DV3T Extra Rheometer and spindle 7 at 10 rev/min.

2. Adhesive system according to claim 1 in the form of a kit as a foil pouch having two chambers.

3. Adhesive system according to claim 1 or 2 for fixing purposes in the construction sector.

4. Adhesive system according to claim 1 or 2 as an adhesive for the DIY sector.

5. Adhesive system according to any one of claims 1 to 4, **characterised in that** the isocyanate prepolymer as such has a viscosity of the isocyanate prepolymer, measured as described in claim 1, of from 2000 to 125 000 mPa*s, more especially preferably from 10 000 to 120 000 mPa*s.

6. Adhesive system according to any one of claims 1 to 4, **characterised in that** the isocyanate prepolymer has a residual content of monomeric isocyanates of 0.5 % by weight or less, especially of 0.1 % by weight or less; a content of reactive isocyanate groups of 4-20 % by weight, preferably from 5 to 15 % by weight, and a viscosity of the isocyanate prepolymer of from 2000 to 125 000 mPa*s, more especially preferably from 10 000 to 120 000 mPa*s.

7. Adhesive system according to any one of claims 1 to 6, wherein, in use, the contents of two or more foil-enclosed chambers (P, I), which are joined to one another to form a foil pouch, are mixed together inside the foil pouch forming the foil-enclosed chambers by rupture of an internal predetermined breaking point (3) between the foil-enclosed chambers (P, I), especially by rolling-up and flexing of the foil pouch, thus uniting the interiors of the foil-enclosed chambers, and via a further predetermined breaking point leading to the outside, after opening thereof, are directed to the outside and thus applied into or preferably onto at least one of the materials to be adhesively bonded, and the materials to be adhesively bonded are brought into contact with one another via the applied adhesive.

8. Adhesive system according to any one of claims 1 to 7 as an adhesive in the DIY sector for adhesively bonding articles, to substrates, especially the surfaces thereof, with preferably smooth absorbent or non-absorbent surfaces, for example materials that consist of plastics, glass, metal, glaze, concrete, masonry, paints, plaster or ceramics or are coated therewith, especially (in each case preferably having a glazed or some other smooth surface) wall tiles, floor tiles, items made of metal, plastics and/or ceramics (such as in the case of baths, bidets, toilet bowls, urinals, mirrors, plastics cupboards or wall cabinets, basins of swimming pools or washbasins).

9. Adhesive system according to claim 8, **characterised in that** the articles to be adhesively bonded are selected from the group including hooks, containers for soap, containers for cosmetics or liquid shampoos or washing liquids, mirror holders, holders for electrical devices such as hair dryers, razors, electric brushes or manual or electric toothbrushes, beaker holders, bottle holders, hand towel holders and hand grips.

10. Use of an adhesive system according to any one of claims 1 to 9 for fixing anchoring elements in holes or crevices, or preferably for adhesively bonding articles, especially made of non-absorbent materials.

11. Method using an adhesive system according to any one of claims 1 to 9, wherein the components of the adhesive system are brought into contact with one another by opening of the internal predetermined breaking point of a foil pouch, especially by application of pressure to the foil pouch and/or by rolling-up of the foil pouch and flexing, and, by application of (as it were massage-like) pressure (flexing) to the foil pouch, are mixed with one another and then, by opening of a region of the foil pouch that is to be opened, especially in the form of a further predetermined breaking point, are directed to the outside and thus applied into or preferably onto at least one of the materials to be adhesively bonded.

**Revendications**

1. Système adhésif à composants multiples, notamment à deux composants, à des fins de fixation dans le domaine du bâtiment et en tant qu'adhésif dans le domaine du bricolage, muni d'un composant à base d'un prépolymère isocyanate distillé, et d'un second composant renfermant des groupes fonctionnels sous forme de composés organiques porteurs de groupes amino, de groupes hydroxyles et/ou de groupes mercapto en tant que durcisseurs, se présentant comme un ensemble constitué d'un pochon en film souple comprenant plusieurs compartiments (P, I) sous la forme de compartiments au nombre de deux ou plus, reliés mutuellement, enveloppés de film souple et pourvus d'une ou plusieurs cloison(s) séparatrice(s) interposée(s) entre lesdits compartiments et garantissant, à chaque fois, un stockage séparé prévenant une réaction des composants qui, sinon, entrent en réaction les uns avec les autres lors d'un mélange, ledit pochon en film souple matérialisant lesdits compartiments (P, I) enveloppés de film souple,
sachant que le prépolymère isocyanate présente une teneur résiduelle en isocyanates monomères inférieure à 1 % en poids, une teneur en groupes isocyanates réactifs de 3 à 25 % en poids, et une viscosité dudit prépolymère isocyanate de 200 000 MPa.s ou moins, laquelle viscosité est déterminée à l'aide d'un rhéomètre Brookfield DV3T Extra et d'une broche n° 7 à 10 tr/min, à 23 °C.

2. Système adhésif selon la revendication 1, revêtant la forme d'un ensemble se présentant comme un pochon en film souple comprenant deux compartiments.

3. Système adhésif selon la revendication 1 ou 2, à des fins de fixation dans le domaine du bâtiment.

4. Système adhésif selon la revendication 1 ou 2, en tant qu'adhésif destiné au domaine du bricolage.

5. Système adhésif selon l'une des revendications 1 à 4, **caractérisé par le fait que** le prépolymère isocyanate présente en tant que tel une viscosité dudit prépolymère isocyanate, mesurée de la manière décrite dans la revendication 1, de 2 000 à 125 000 mPa.s et de 10 000 à 120 000 mPa.s avec préférence toute particulière.

6. Système adhésif selon l'une des revendications 1 à 4, **caractérisé par le fait que** le prépolymère isocyanate présente une teneur résiduelle en isocyanates monomères de 0,5 % en poids ou moins, notamment de 0,1 % en poids ou moins ; une teneur en groupes isocyanates réactifs de 4-20 % en poids, préférentiellement de 5 à 15 % en poids ; et une viscosité dudit prépolymère isocyanate de 2 000 à 125 000 mPa.s, et de 10 000 à 120 000 mPa.s avec préférence toute particulière.

7. Système adhésif selon l'une des revendications 1 à 6, dans lequel les contenus de compartiments (P, I) au nombre de deux ou plus, enveloppés de film souple et reliés mutuellement pour former un pochon en film souple, sont mélangés par destruction d'une zone intérieure de rupture par destination (3) entre lesdits compartiments (P, I) enveloppés de film souple, avec réunion mutuelle des espaces internes desdits compartiments enveloppés de film souple, à l'intérieur dudit pochon en film souple formant lesdits compartiments enveloppés de film souple dans le cas d'application, notamment en enroulant et en foulant ledit pochon en film souple et, par l'intermédiaire d'une zone supplémentaire de rupture par destination gagnant l'extérieur, lesdits contenus sont canalisés vers l'extérieur après ouverture de ladite zone et sont ainsi déposés dans ou, de préférence, sur au moins l'un des matériaux respectivement destinés au collage, et lesdits matériaux à coller sont mis en contact réciproque par l'intermédiaire de l'adhésif déposé.

8. Système adhésif selon l'une des revendications 1 à 7, en tant qu'adhésif dans le domaine du bricolage, conçu pour assujettir par collage des objets à des substrats, en particulier aux surfaces de ces derniers présentant des surfaces absorbantes ou non absorbantes, préférentiellement lisses, consistant par exemple en une matière plastique, en du verre, en un métal, en un émail, en du béton, en une maçonnerie, en des peintures, en des enduits ou en une céramique, voire en des matériaux revêtus de ces substances, en particulier des carrelages en céramique, des carrelages en faïence, des parties en métal, en matière plastique et/ou en céramique (respectivement émaillés, de préférence, ou à surfaces lisses en variante) (comme dans le cas d'une baignoire, d'un bidet, de cuvettes de toilettes, d'urinoirs, de miroirs, d'armoires ou de placards en matière plastique, de bassins de piscines, ou d'éviers).

**9.** Système adhésif selon la revendication 8, **caractérisé par le fait que** les objets, devant être assujettis par collage, sont choisis au sein du groupe comprenant des crochets, des récipients pour savon, des récipients pour cosmétiques ou pour shampoings liquides ou liquides de lavage, des supports de miroirs, des supports pour appareils électriques tels que des sèche-cheveux, des rasoirs, des brosses électriques ou des brosses à dents manuelles ou électriques, des porte-gobelets, des porte-flacons, des porte-serviettes et des barres d'appui.

**10.** Utilisation d'un système adhésif conforme à l'une des revendications 1 à 9, pour la fixation d'éléments d'ancrage dans des trous ou des interstices ou, de préférence, pour l'assujettissement par collage d'objets consistant, notamment, en des matériaux non absorbants.

**11.** Procédé utilisant un système adhésif conforme à l'une des revendications 1 à 9, dans lequel les composants dudit système adhésif sont mis en contact réciproque en ouvrant la zone intérieure de rupture par destination d'un pochon en film souple, notamment par pression exercée sur le pochon en film souple et/ou par enroulement dudit pochon en film souple, et par foulage, puis sont mélangés mutuellement en pressant (foulant) ledit pochon en film souple (quasiment avec effet massant), pour être ensuite canalisés vers l'extérieur par ouverture d'une région dudit pochon en film souple vouée à l'ouverture et revêtant, en particulier, la forme d'une zone supplémentaire de rupture par destination, en étant ainsi déposés dans ou, de préférence, sur au moins l'un des matériaux respectivement destinés au collage.

Fig. 1

Fig. 2

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- DE 10055786
- DE 102009046050 A1
- DE 102007052207 A1
- EP 1439155 A1
- EP 2062926 A1
- DE 10055786 A1
- WO 02079341 A
- WO 02079293 A

### In der Beschreibung aufgeführte Nicht-Patentliteratur

- Polyurethane, Kunststoff Handbuch. Carl Hanser Verlag, 1993, 121